# EUROPEAN PATENT SPECIFICATION

(11) **EP 3 666 511 B1**
(45) Date of publication and mention of the grant of the patent: **13.10.2021**
(21) Application number: 19215829.3
(22) Date of filing: 12.12.2019
(51) Int. Cl.: B29D 30/24

(54) **BUILDING GROUP FOR BUILDING A TYRE CARCASS**
BAUGRUPPE ZUM AUFBAU EINER REIFENKARKASSE
GROUPE DE CONSTRUCTION D'UNE CARCASSE DE PNEUMATIQUE

(30) Priority: 12.12.2018 IT 201800011018
(43) Date of publication of application: 17.06.2020
(73) Proprietor: Marangoni Meccanica S.P.A., 38068 Rovereto (TN) (IT)
(72) Inventor: LENTI, Massimo, 38068 Rovereto (TN) (IT); WEBER, Michele, 38068 Rovereto (TN) (IT)
(74) Representative: Giannini, Manuela

(56) References cited:
- EP-A2- 1 295 702
- WO-A1-02/40258

## Description

### CROSS-REFERENCE TO RELATED APPLICATIONS

This patent application claims priority from Italian patent application no. 10018000011018 filed on December 12, 2018.

### TECHNICAL FIELD

The present invention relates to a building group for producing a tyre carcass.

### BACKGROUND ART

For producing the tyre carcass, it is known to overlap a plurality of rubber-coated plies and to press them one on top of the other, generally by means of a rolling process to eliminate any air bubbles and bring the plies to adhere to each other so as to produce a homogeneous tubular body. The axially opposite free end portions of the above-mentioned homogeneous tubular body are then deformed inwards and then folded back on themselves after inserting their respective heel rings, as disclosed, for example, in WO 02/40258 A1 and EP 1 295 702 A2.

The building operations described above are carried out using a carcass-building group, which comprises a motor-driven building drum that is rotatable about its own horizontal axis and having an outer cylindrical supporting surface for the rubber-coated plies. The group then comprises an additional pair of supporting drums adapted for being arranged on axially opposite sides of the building drum and commonly known as "cans". The cans, which are nothing more than fixed-diameter drums, each have their own outer diameter equal to the outer diameter of the building drum.

During the overlapping step and the subsequent ply-rolling step, the cans are set alongside the building drum and their outer surfaces form opposite prolongations of the supporting surface of the same building drum.

Before the subsequent deformation step of the above-mentioned end portions, the cans are moved away from the building drum, allowing the corresponding end portions to protrude, overhanging, the building drum and thus be deformed and folded back.

Although universally used, the known building groups are not very satisfactory, especially because they make the operations, in which the cans are brought close and moved away, long and difficult. The known cans, in fact, being in practice monolithic cans, are difficult to handle and their handling requires large manoeuvring spaces and the use of dedicated handling equipment, which are also cumbersome in themselves. As a result, the known groups require large manoeuvring areas and skilled labour and are, therefore, relatively expensive from both a production and from a management point of view.

In addition to this, the operations for removing and repositioning the cans require a lot of time that do not allow the production rate of the group to be raised beyond certain limits.

Last but not least, after repeated removing and repositioning operations of the cans against the building drum, positioning errors inevitably occur that, in fact, do not allow the quality level of the formed carcasses to be raised. In many cases, in fact, the carcasses have surface defects and, sometimes, even structural defects, such as streaks, lines, and localised deformations.

Experimentally, it was observed that the defects described above are essentially due to the formation of misalignments between the surfaces of the drum and those of the cans.

### DISCLOSURE OF INVENTION

The purpose of the present invention is to produce a building group for building a tyre carcass, the production features of which allow the problems described above to be solved in a simple and economic manner and, in particular, allow the production of tyre carcasses of a high and unvarying structural, geometrical, and dimensional quality in a short time.

According to the present invention, a building group for building tyre carcasses is provided, as claimed in claim 1.

### BRIEF DESCRIPTION OF THE DRAWINGS

The invention will now be described with reference to the accompanying drawings, which show a non-limiting embodiment thereof, wherein:
- Figure 1, shows, in cross-section and substantially in block diagrams, a preferred embodiment of a building group for producing a tyre carcass, produced according to the dictates of the present invention;
- Figures 2 to 5 are similar figures to Figure 1 and partially show the plant from Figure 1 in four different functional conditions;
- Figures 6 and 7 show, in cross-section, two different steps for building the tyre carcass;
- Figures 8 and 9 show, in perspective view and enlarged with parts removed for clarity, a detail of the plant from Figures 1-5 arranged in two different functional conditions; and
- Figures 10 and 11 show, in perspective view and greatly enlarged, a detail from Figure 8 and, respectively, a detail from Figure 9.

### BEST MODE FOR CARRYING OUT THE INVENTION

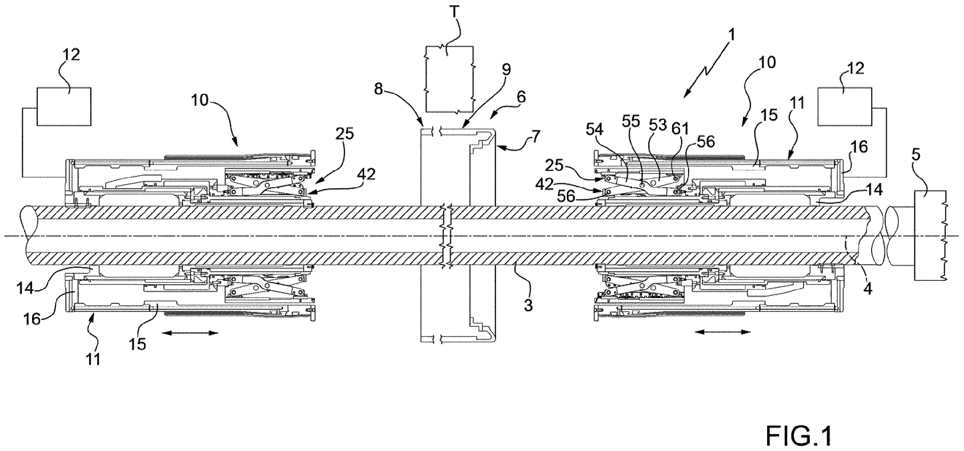

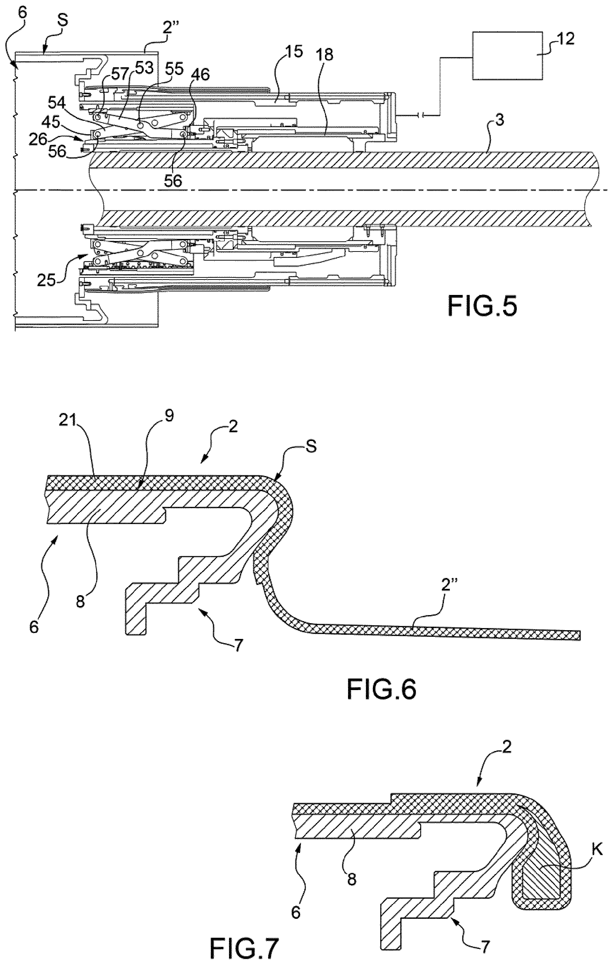

In Figure 1, the number 1 designates, as a whole, a building group for building a tyre carcass 2 (Figures 6 and 7). The group 1 comprises a motor-driven supporting shaft 3, axially fixed and rotatable about its own axis 4 under the thrust of an actuator 5, schematically shown in Fig. 1.

The group 1 also comprises a building drum 6, known in itself and not described in detail, which surrounds the shaft 3 and is coupled to the shaft 3 itself coaxially to the axis 4 in an axially and angularly fixed position, so as to rotate in unison with the shaft 3 itself.

The drum 6 has two shaped front walls 7, only one of which is visible in Figure 1, and a tubular wall 8 externally delimited by a cylindrical surface 9 coaxial to the axis 4 and, in use, for supporting the rubber-coated plies T, only one of which is shown in Figure 1, for the building of the carcass 2.

Again with reference to Figure 1, the group 1 also comprises two building modules 10 arranged along the axis 4 on opposite axial sides of the building drum 6.

The two modules 10, which are identical to each other, each surround a corresponding stretch of the shaft 3 and are coupled to the shaft 3 itself in an angularly fixed position to rotate in unison with the drum 6.

Each module 10 comprises a corresponding hollow structure 11, which is mobile in opposite directions along the shaft 3 from and towards the drum 6 under the thrust of an actuator 12, schematically shown, preferably an electromechanical actuator.

Each structure 11 comprises an inner tubular body 14 slidably coupled to the shaft 3 along the axis 4 in an angularly fixed position, an outer tubular body 15 surrounding the inner tubular body 14 and an annular wall 16 at the bottom, from which both tubular bodies 14 and 15 extend, overhanging, towards the corresponding front wall 7 of the building drum 6.

The outer tubular body 15 has a maximum outer diameter that is smaller than the outer diameter of the surface 9 of the drum 6.

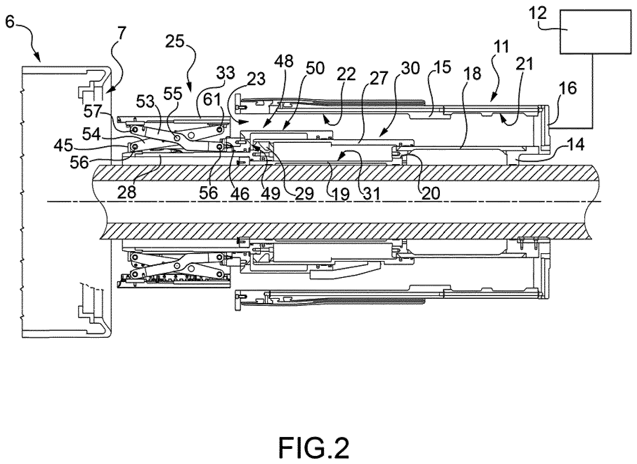

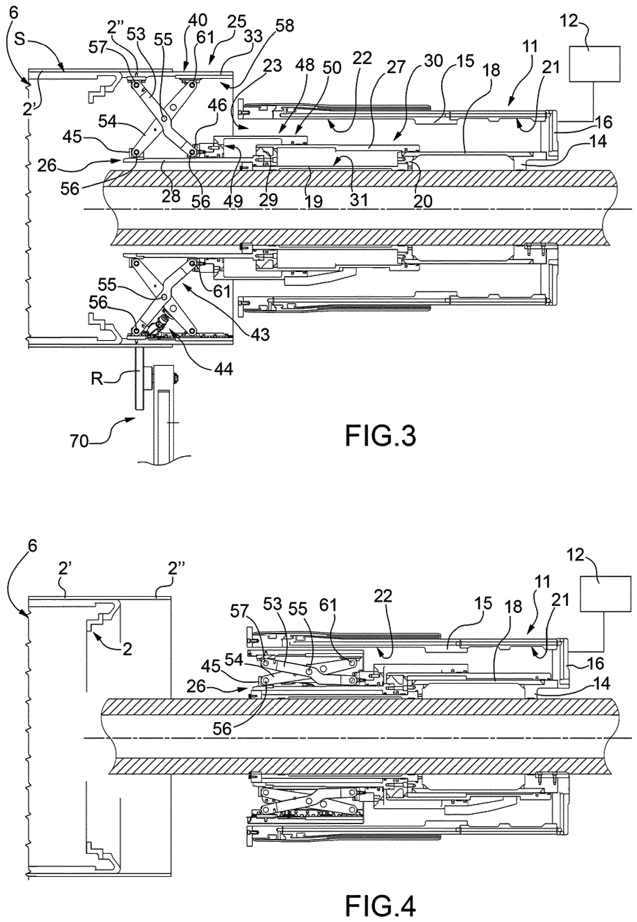

With reference to Figures 2 and 3, the inner tubular body 14 has, starting from the wall 16, one tubular stretch 18 and another tubular stretch 19, having an outer diameter smaller than the outer diameter of the first tubular stretch 18, and connected to the first tubular stretch 18 by a radial wall 20 orthogonal to the axis 3.

The outer tubular body 15 delimits, with the tubular stretches 18 and 19, the corresponding annular cavities 21 and 22 communicating with each other and, of which, the cavity 22 has an inlet opening 23 facing the corresponding front surface 7 of the drum 6.

With reference to Figure 1 again, each module 10 also comprises a corresponding collapsible building can 25 that, in turn, comprises its own tubular shaft or hub 26 for attachment and support, which surrounds the inner tubular body 14, coaxially to the axis 4, and is coupled to the inner tubular body 14 in an axially slidable manner and in an angularly fixed position. Each hub 26 has a shape that is complementary to that of the inner tubular body 14 and comprises - beginning from the wall 16 again - one tubular stretch 27 coupled to one stretch 18, so it can slide and is fluid-tight, and another tubular stretch 28 having an inner diameter less than the inner diameter of the first tubular stretch 27. One tubular stretch 27 is coupled to another tubular stretch 19 in a slidable and fluid-tight manner and is firmly connected to another tubular stretch 28 by a radial wall 29 arranged facing the radial wall 20. The tubular stretches 19 and 27 and the radial walls 20 and 29 form part of a pneumatic linear actuator 30 fully housed inside its corresponding module 10 and delimit between them a variable-volume chamber 31 of the same actuator 30. The chamber 31 is connected, in a way that is well known, to a pressurisation/depressurisation group to translate the hub 26 in opposite directions with respect to the tubular bodies 14 and 15, as will be better explained below.

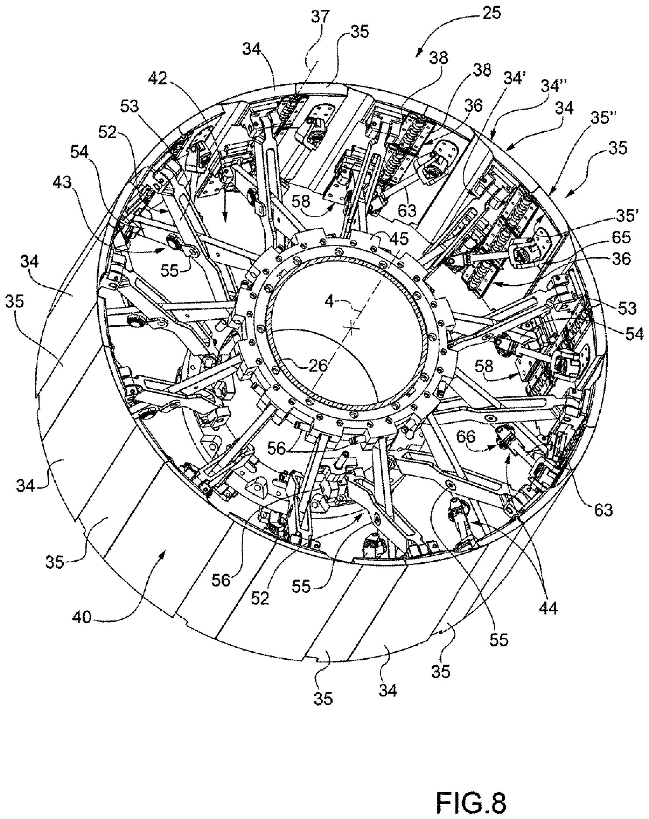

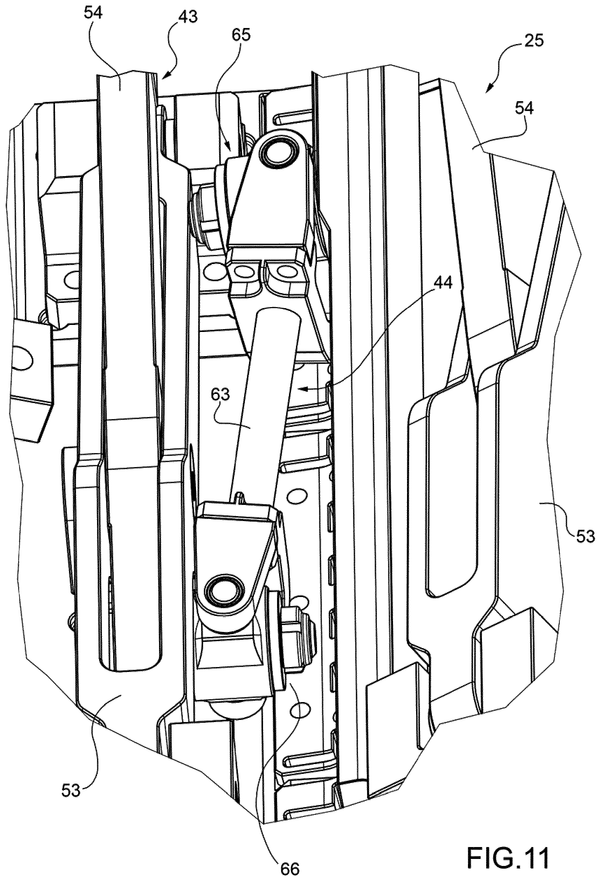

With reference to Figure 3, and, in particular, to Figures 8 to 11, each can 25 is a can that can be configured and is adapted for being arranged in two different radial configurations. One configuration is operational or radially expanded and of maximum diameter, shown in Figures 3, 8, and 10, wherein it has an outer diameter equal to the outer diameter of the drum 6, and one is resting or radially collapsed and of minimum diameter, shown in Figures 1,2,4,5,9, and 11. When arranged in their resting configurations, the overall dimensions of each can 25 are such that it can be fully housed inside its corresponding cavity 22 through its corresponding inlet 23, as can be seen in Figures 1, 4, and 5.

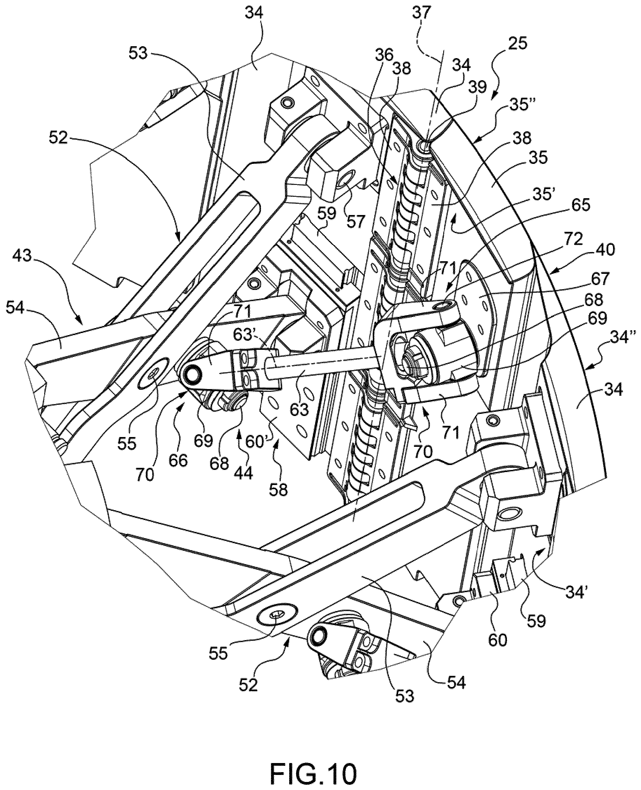

With reference to Figures 8 to 11, each can 25 comprises a corresponding sleeve 33 for supporting part of the plies T during the building of the carcass 2, as will be better described below. Each sleeve 33 surrounds the tubular stretch 28 of the corresponding attachment hub 26 coaxially to the axis 4 and comprises a ring of tile-like segments 34 and a ring of segments 35 circumferentially alternating with the segments 34. Each of the first segments 35 is coupled to a second segment 34 adjacent to it by means of a corresponding hinge 36 having a hinge axis 37 that is mobile parallel to the axis 4. In particular, each hinge 36 is arranged within the sleeve 33 and comprises two wings 38 firmly connected to the inner surfaces 34' and 35' of the corresponding segments 34 and 35 and a hinge pin 39 coaxial to the axis 37 and intersected by the prolongation of the inner surfaces 34' and 35' themselves (Figure 10).

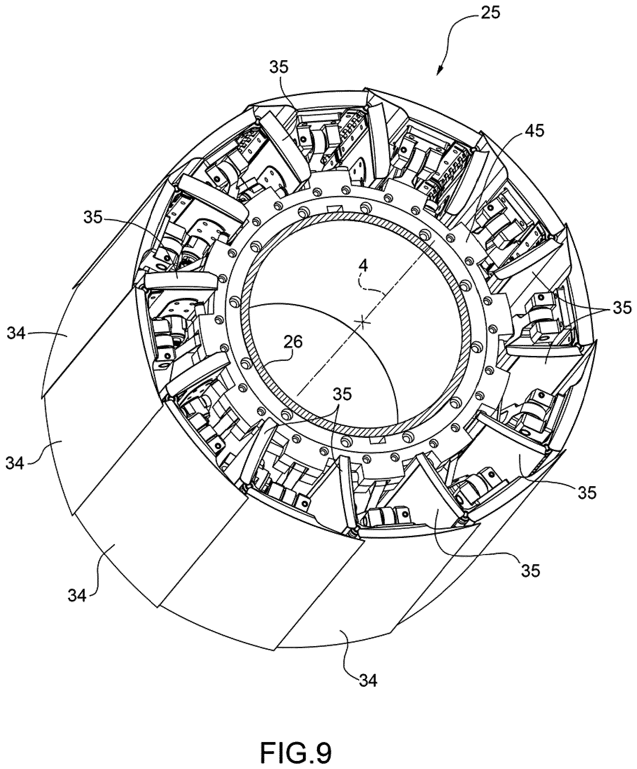

When the can 25 is arranged in its expanded configuration, the corresponding segments 34 and 35 are placed next to each other, circumferentially and seamlessly, and their outer surfaces 34" and 35" each define a portion of an outer cylindrical surface 40 for supporting the sheets T, as can be clearly seen in Figure 8. When, instead, the can 25 is arranged in its contracted condition, the corresponding segments 34 have partially overlapping end portions, while the other segments 35 extend towards the axis 4 in substantially radial directions and, each, in a position substantially orthogonal to the segment 34 to which it is hinged, as can be seen in Figure 9.

Again with reference to Figures 8 to 11, each of the cans 25 also comprises a motor-driven pantograph group 42 for displacing the segments 34 and 35 to and from the axis 4. Each group 42 comprises, in turn, a motor-driven pantograph device 43 for radially displacing the corresponding segments 34 in radial directions between a retracted resting position wherein the segments 34 are set alongside the corresponding axis 4 and an extracted operating position wherein they define the corresponding surface 40, and a corresponding device 44 for rotating the segments 35 with respect to the corresponding segments 34 about the respective hinge axes 37.

Each device 43 comprises two of its own annular bodies 45 and 46 (Figure 3), which surround the stretch 28 of its corresponding attachment hub 26 coaxially to the axis 4. The annular body 45 is firmly connected to a free end portion of the corresponding stretch 28, while the annular body 46 is axially spaced from the tubular body 45 and is slidably coupled to the same stretch 28 and in an angularly fixed position. One tubular body 46 is mobile from and towards another tubular body 45 under the thrust of a hydraulic actuator 48, which is always at least partially housed in its corresponding cavity 22 and passes through its corresponding inlet 23. Each pneumatic actuator 48 has a corresponding variable-volume chamber 49 connected to a pressurisation/depressurisation circuit that cannot be seen in the attached figures; preferably, each chamber 49 is delimited by a portion of its corresponding stretches 27 and 28 and by the radial wall 29, on the one hand, and by a corresponding tubular body 50, on the other. Each tubular body 50 is coupled to the corresponding stretches 27 and 28 in a fluid-tight manner and has a sliding end portion, which is slidably coupled to the corresponding stretch 28 and is firmly, mechanically connected to the corresponding annular body 46.

Each device 43 comprises, then, for each segment 34, a corresponding pantograph transmission 52, in turn, comprising two arms 53 and 54 arranged in an X-shape (Figures 3, 8, and 10) and having their respective intermediate portions pivoted between them via a pivot pin 55 for rotating about a corresponding pin axis orthogonal to the corresponding hinge axis 37; the arms 53 and 54 having respective end portions facing the annular bodies 45 and 46 hinged, each, to one of the annular bodies 45 and 46 themselves via corresponding pins 56 (Figures 1, 3, and 8) parallel to the pin 55 for rotating about the axes of the corresponding pins 56 and corresponding opposite end portions coupled to the corresponding segment 34. In particular, with reference to Figures 3 and 10, each arm 53 is hinged to the relative segment 34 via a corresponding pin 57 parallel to the pin 55 for rotating about the pin axis 57, while the arm 54 is coupled to the corresponding segment 34 via a guide-and-slide assembly 58. Each guide-and-slide assembly 58 comprises a straight guide 59 parallel to the axis 4 and orthogonal to the corresponding pivot pin 55 and a slide 60, which is slidable along the guide 59, and to which the free end of the corresponding arm 54 is hinged via a pin 61 parallel to the corresponding pins 55 and 56.

With reference to the Figures 8, 10, and 11 again, each segment 35 rotation device 44 comprises for each segment 35 a corresponding tension-rod/strut 63, which extends diagonally between the corresponding segment 35 and a corresponding arm 54 and has an end portion coupled to the surface of the corresponding segment 35 via a joint or articulation 65, and to the corresponding arm 54 via a joint or articulation 66. The articulation 66 is arranged between its corresponding pivot pin 55 and the corresponding segment 35.

With reference to Figure 10, each joint 65 preferably comprises an attachment plate 67 rested on the inner surface 35' of the corresponding segment 35 and firmly connected to the same segment 35, a pivot pin 68 attached to the plate 67 and extending orthogonally to the same plate 67, and an attachment head 69 idly rotatable on the pin 68 and axially locked on the pin 68 itself. Each joint 65 then comprises a fork 70, the arms 71 of which extend from opposite sides of the head 69 and are hinged to the head 69 itself by means of a pin 72 orthogonal to the pivot pin 68. The fork 70 has a crossbar that is rotatably coupled to the end of the tension-rod/strut 63 about an axis 63' of the tension-rod/strut 63 and in a fixed position along the axis 63' itself.

Also with reference to Figure 8, each first joint 66 is similar to the second joint 65 and, for this reason, the different parts of the first joint 66 are marked with the same reference numbers used to distinguish the corresponding parts of the second joint 65. The first joint 66 differs from the second joint 65 in that it lacks the plate 67, in that the pivot pin 68 is directly and firmly connected to the arm 54, and in that the tension-rod/strut 63 is firmly connected to the fork 70.The operation of the group 1 will now be described starting from the condition shown in Figure 3, wherein both structures 10 are arranged and kept in their retracted position and spaced apart from the drum 6, and the cans 25 are both arranged in their radially collapsed resting configuration and are fully housed, each one, within its corresponding cavity 22.

Starting from this condition, keeping the first chamber 49 depressurised and pressurising the second chamber 31, the cans 25 are extracted from the corresponding cavities 22, as shown in Figure 2. At this point, the first chambers 49 are also pressurised and the cans 25 are brought by the corresponding groups 42 to their expanded operating configuration, after which the structures 11 are advanced towards the drum 6 by means of the actuators 12 until the segments 34 and 35 are abutted against the shaped front walls 7 of the drum 6. In this condition, the outer surfaces 40 of the cans 25 constitute corresponding opposite axial prolongations of the surface 9 of the building drum 6 producing an extended, seamless cylindrical building surface, as can be seen in Figure 3.

At this point, as is well known, the plies T are advanced towards the extended cylindrical surface and are progressively overlapped onto each other and rolled by means of a rolling device 70 (Figure 3), one of the rolling wheels of which R is thrust by a pneumatic actuator (not shown) so as to force the plies T one on top of the other and against the drum 6 and the cans 25, producing a homogeneous semi-finished product S (Figure 3). The semi-finished product S thus created has an intermediate portion 2' arranged on the surface 9 and two axial portions 2" each arranged on a relative surface 40, as can also be seen in Figure 3.

Once the rolling step has been completed, the structures 11 are first slightly spaced apart from the drum 6 and then the chambers 49 are depressurised, bringing the cans 25 back to their collapsed configurations; after which, the chambers 31 are also depressurised, bringing the same cans 25 each to the corresponding cavity 22 and passing them through the corresponding passages 23. In this way, both cans 25 are removed from the rolling area, leaving the two tubular portions 2" of the semi-finished product S protruding, overhanging, from the drum 6, as can be seen in Figure 4.

Once the cans 25 have been moved away, both the building modules 10 are advanced towards the drum 6 activating the corresponding actuators 12 until both structures 11 are brought to rest on or tangential to the walls 7 of the drum 6 itself, as can be seen in Figure 5. At this point, the semi-finished product S is first folded back on the shaped walls 7 of the drum 6, as shown in Figure 6, after which, a corresponding heel ring K is fixed to each portion 2", and the portions 2" are folded back bringing them back, partially, on the drum 6 so as to wrap the corresponding heel rings K, as shown in Figure 7.

From the above it is clear that the use of the two modules configured to support, handle, and accommodate the cans within them allows, on the one hand, the operations of bringing near and moving away the same cans to be made easy and fast. Not only that, but the handling is carried out in very limited spaces, reducing the overall dimensions of the group, compared to the known solutions, and being able, among other things, to dispense with temporary external warehouses for housing the same cans.

In addition to this, the displacements of the cans practically do not require human intervention and are carried out in a particularly short time as the same cans are always kept close to the building drum. As a result, group 1, as described above, reduces management time and costs, on the one hand, and increases the production rate of carcasses, on the other.

Since the modules 10 are constructively simple from a production point of view, it was experimentally observed that there was none of the wear that generates positioning errors or misalignments between the carcasses and the building drum. This makes it possible to preserve the quality of the carcasses, unvaried, over time.

The particular construction method of the cans 25, and in particular, the fact that they can be arranged in a collapsed configuration with minimum overall dimensions allows the same cans to be housed in particularly confined spaces.

The pantograph transmission group provided allows, compared to the known solutions, the weight to be significantly reduced, but, above all, precise and unvarying positions to be obtained over time.

From the above it is apparent that modifications and variations may be carried out without departing from the scope defined in the independent claim. In particular, the structures 11 of the modules 10 could be produced in a different way from the one described, but always with the aim of housing the corresponding can.

The corresponding cans could be constructively different from the one described above, both in terms of the sleeve and in terms of the transmission and the actuators for handling the segments.

Finally, there could be several actuators provided for both the displacement of the cans 25 with respect to the structures 11 and for the displacement of the structures 11 with respect to the building drum 2.

## Claims

1. A building group for building a tyre carcass; the group comprising: a motor-driven building drum, which is rotatable about a fixed axis thereof and is delimited on the outside by a cylindrical supporting surface for resting rubber-coated plies for building the carcass; and two motor-driven building cans which are rotatable about said axis in unison with said building drum and are adapted to be set alongside, and on axially opposite sides of, said building drum so as to define respective axial prolongations of said cylindrical supporting surface; wherein said building group comprises two building modules arranged on axially opposite sides of said drum; **and characterised by** each of said modules comprising a corresponding said building can; each building can comprising a ply-resting sleeve having a plurality of mobile tile-like segments and first actuator means for displacing said mobile segments between an extracted operating position, in which the sleeve has an external diameter equal to the external diameter of said building drum, and a retracted resting position, in which the sleeve has a diameter smaller than that of said building drum; each said module further comprising a corresponding tubular supporting structure rotatable about said axis in unison with said drum; second actuator means being provided for displacing each of said cans along said axis between an advanced position, in which the corresponding can is set alongside said building drum, and a retracted position, in which the corresponding can is housed within the respective said tubular structure with the corresponding segments arranged in their resting position; third actuator means being provided for translating each said tubular structure along said axis from and towards said building drum.

2. The group according to Claim 1, **characterized in that** each said tubular structure has a passage for entry/exit of the corresponding said can arranged coaxially to the axis and facing a front wall of said drum.

3. The group according to any one of the preceding claims, **characterized in that** said second actuator means are completely housed inside the respective said tubular structure.

4. The group according to any one of the preceding claims, **characterized in that** said second actuator means comprise a single pneumatic cylinder.

5. The group according to Claim 4, **characterized in that** said pneumatic cylinder extends coaxially to said axis.

6. The group according to any one of the preceding claims, **characterized in that** said first actuator means are at least partly housed in a corresponding said tubular structure and at least partly housed within the corresponding said sleeve.

7. The group according to any one of the preceding claims, **characterized in that** said first actuator means comprise a single further linear actuator at least partly housed in the corresponding said tubular structure coaxially to said axis.

8. The group according to any one of the preceding claims, **characterized in that** said first actuator means comprise a pantograph transmission completely housed in said sleeve.

9. The group according to any one of the preceding claims, **characterized in that** each of the said structures is delimited on the outside by a cylindrical surface having an external diameter smaller than the diameter of said building drum.

10. The group according to any one of the preceding claims, **characterized in that** it comprises a single motor-driven shaft coaxial to said axis; said building drum and said two modules surrounding said shaft and being angularly connected to said shaft.

11. The group according to any one of the preceding claims, **characterized in that** each said supporting structure comprises an outer tubular body and an inner tubular body, which are coaxial to the axis; said inner and outer tubular bodies defining between them a corresponding cavity that houses the corresponding said can, part of said first actuator means, and said second actuator means.

12. The group according to Claim 11, **characterized in that** each said can comprises a tubular hub thereof slidably coupled to the corresponding said inner tubular body; said inner body and said tubular hub delimiting a first variable-volume chamber and a second variable-volume chamber for an operating fluid of said first and second actuator means, respectively.

## Patentansprüche

1. Baugruppe zum Bauen einer Reifenkarkasse; wobei die Gruppe umfasst: eine motorbetriebene Bautrommel, die um eine feste Achse davon drehbar ist und an der Außenseite durch eine zylindrische Stütz- bzw. Trägerfläche zum Lagern bzw. Aufliegen von gummibeschichteten Lagen zum Bauen der Karkasse begrenzt ist; und zwei motorbetriebene Baudosen, die im Einklang bzw. zusammen mit der Bautrommel um die Achse drehbar sind und angepasst sind, entlang bzw. neben und auf axial gegenüberliegenden bzw. entgegengesetzten Seiten der Bautrommel platziert bzw. festgelegt zu sein, um jeweilige axiale Verlängerungen der zylindrischen Stützfläche zu definieren; wobei die Baugruppe zwei Baumodule umfasst, die auf axial gegenüberliegenden bzw. entgegengesetzten Seiten der Trommel angeordnet sind; und **dadurch gekennzeichnet, dass** jedes der Module eine entsprechende Baudose umfasst; wobei jede Baudose eine Lagenlager- bzw. -auflagehülse mit einer Mehrzahl mobiler fliesenartiger Segmente und erste Aktormittel zum Verlagern der mobilen Segmente zwischen einer herausgezogenen Betriebsposition, in der die Hülse einen Außendurchmesser gleich dem Außendurchmesser der Bautrommel aufweist, und einer zurückgezogenen Ruheposition umfasst, in der die Hülse einen kleineren Durchmesser als die Bautrommel aufweist; wobei jedes Modul ferner eine entsprechende rohrförmige Stütz- bzw. Trägerstruktur umfasst, die im Einklang bzw. zusammen mit der Trommel um die Achse drehbar ist; wobei zweite Aktormittel bereitgestellt sind zum Verlagern jeder der Dosen entlang der Achse zwischen einer vorgeschobenen Position, in der die entsprechende Dose entlang bzw. neben der Bautrommel platziert bzw. festgelegt ist, und einer zurückgezogenen Position, in der die entsprechende Dose innerhalb der jeweiligen rohrförmigen Struktur untergebracht ist, wobei die entsprechenden Segmente in ihrer Ruheposition angeordnet sind; wobei dritte Aktormittel bereitgestellt sind zum Verschieben jeder der rohrförmigen Strukturen entlang der Achse von und zu der Bautrommel hin.

2. Gruppe nach Anspruch 1, **dadurch gekennzeichnet, dass** jede der rohrförmigen Strukturen einen Durchgang zum Eintritt/Austritt der entsprechenden Dose aufweist, der koaxial zu der Achse angeordnet ist und einer vorderen Wand der Trommel zugewandt ist.

3. Gruppe nach einem der vorhergehenden Ansprüche, **dadurch gekennzeichnet, dass** die zweiten Aktormittel vollständig innerhalb der jeweiligen rohrförmigen Struktur untergebracht sind.

4. Gruppe nach einem der vorhergehenden Ansprüche, **dadurch gekennzeichnet, dass** die zweiten Aktormittel einen einzigen bzw. einzelnen pneumatischen Zylinder umfassen.

5. Gruppe nach Anspruch 4, **dadurch gekennzeichnet, dass** sich der pneumatische Zylinder koaxial zu der Achse erstreckt.

6. Gruppe nach einem der vorhergehenden Ansprüche, **dadurch gekennzeichnet, dass** die ersten Aktormittel zumindest teilweise in einer entsprechenden rohrförmigen Struktur untergebracht sind und zumindest teilweise innerhalb der entsprechenden Hülse untergebracht sind.

7. Gruppe nach einem der vorhergehenden Ansprüche, **dadurch gekennzeichnet, dass** die ersten Aktormittel einen einzelnen bzw. einzigen weiteren Linearaktor umfassen, der zumindest teilweise in der entsprechenden rohrförmigen Struktur koaxial zu der Achse untergebracht ist.

8. Gruppe nach einem der vorhergehenden Ansprüche, **dadurch gekennzeichnet, dass** die ersten Aktormittel ein Pantografgetriebe umfassen, das vollständig in der Hülse untergebracht ist.

9. Gruppe nach einem der vorhergehenden Ansprüche, **dadurch gekennzeichnet, dass** jede der Strukturen an der Außenseite durch eine zylindrische Fläche bzw. Oberfläche begrenzt ist, die einen Außendurchmesser aufweist, der kleiner als der Durchmesser der Bautrommel ist.

10. Gruppe nach einem der vorhergehenden Ansprüche, **dadurch gekennzeichnet, dass** sie eine einzige bzw. einzelne motorbetriebene Welle koaxial zu der Achse umfasst; wobei die Bautrommel und die beiden Module die Welle umgeben und winkelig mit der Welle verbunden sind.

11. Gruppe nach einem der vorhergehenden Ansprüche, **dadurch gekennzeichnet, dass** jede der Stützstrukturen einen äußeren rohrförmigen Körper und einen inneren rohrförmigen Körper umfasst, die koaxial zu der Achse sind; wobei der innere und der äußere rohrförmige Körper zwischen sich einen entsprechenden Hohlraum definieren, der die entsprechende Dose, einen Teil der ersten Aktormittel und die zweiten Aktormittel aufnimmt.

12. Gruppe nach Anspruch 11, **dadurch gekennzeichnet, dass** jede Dose eine rohrförmige Nabe davon umfasst, die gleitend bzw. verschiebbar mit dem entsprechenden inneren rohrförmigen Körper gekoppelt ist; wobei der innere Körper und die rohrförmige Nabe eine erste Kammer variablen Volumens und eine zweite Kammer variablen Volumens für ein Betriebsfluid der ersten bzw. zweiten Aktormittel abgrenzen.

## Revendications

1. Groupe de construction pour construire une carcasse de pneu ; le groupe comprenant : un tambour de construction entraîné par moteur, qui peut tourner autour d'un axe fixe de celui-ci et est délimité sur l'extérieur par une surface de support cylindrique pour reposer des nappes revêtues de caoutchouc pour construire la carcasse ; et deux boîtes de construction entraînées par moteur qui peuvent tourner autour dudit axe à l'unisson avec ledit tambour de construction et sont adaptées pour être à côté dudit tambour de construction et sur des côtés axialement opposés de ce dernier de manière à définir des prolongements axiaux respectifs de ladite surface de support cylindrique ; dans lequel ledit groupe de construction comprend deux modules de construction agencés sur des côtés axialement opposés dudit tambour ; **et caractérisé par** chacun desdits modules comprenant une dite boîte de construction correspondante ; chaque boîte de construction comprenant un manchon de repos de nappe présentant une pluralité de segments de type tuile mobiles et un premier moyen actionneur pour déplacer lesdits segments mobiles entre une position de fonctionnement extraite, dans laquelle le manchon présente un diamètre externe égal au diamètre externe dudit tambour de construction, et une position de repos rétractée, dans laquelle le manchon présente un diamètre inférieur à celui dudit tambour de construction ; chaque dit module comprenant en outre une structure de support tubulaire correspondante pouvant tourner autour dudit axe à l'unisson avec ledit tambour ; un deuxième moyen actionneur étant prévu pour déplacer chacune desdites boîtes le long dudit axe entre une position avancée, dans laquelle la boîte correspondante est placée à côté dudit tambour de construction, et une position rétractée, dans laquelle la boîte correspondante est logée dans ladite structure tubulaire respective avec les segments correspondants agencés dans leur position de repos ; un troisième moyen actionneur étant prévu pour translater chaque dite structure tubulaire le long dudit axe depuis et vers ledit tambour de construction.

2. Groupe selon la revendication 1, **caractérisé en ce que** chaque dite structure tubulaire comporte un passage pour entrée/sortie de ladite boîte correspondante agencé de manière coaxiale à l'axe et faisant face à une paroi avant dudit tambour.

3. Groupe selon l'une quelconque des revendications précédentes, **caractérisé en ce que** ledit deuxième moyen actionneur est complètement logé à l'intérieur de ladite structure tubulaire respective.

4. Groupe selon l'une quelconque des revendications précédentes, **caractérisé en ce que** ledit deuxième moyen actionneur comprend un cylindre pneumatique unique.

5. Groupe selon la revendication 4, **caractérisé en ce que** ledit cylindre pneumatique s'étend de manière coaxiale audit axe.

6. Groupe selon l'une quelconque des revendications précédentes, **caractérisé en ce que** ledit premier moyen actionneur est au moins partiellement logé dans une dite structure tubulaire correspondante et au moins partiellement logé dans ledit manchon correspondant.

7. Groupe selon l'une quelconque des revendications précédentes, **caractérisé en ce que** ledit premier moyen actionneur comprend un actionneur linéaire supplémentaire unique au moins partiellement logé dans ladite structure tubulaire correspondante de manière coaxiale audit axe.

8. Groupe selon l'une quelconque des revendications précédentes, **caractérisé en ce que** ledit premier moyen actionneur comprend une transmission pantographe complètement logée dans ledit manchon.

9. Groupe selon l'une quelconque des revendications précédentes, **caractérisé en ce que** chacune desdites structures est délimitée sur l'extérieur par une surface cylindrique présentant un diamètre externe inférieur au diamètre dudit tambour de construction.

10. Groupe selon l'une quelconque des revendications précédentes, **caractérisé en ce qu'**il comprend un arbre unique entraîné par moteur coaxial audit axe ; ledit tambour de construction et lesdits deux modules entourant ledit arbre et étant angulairement reliés audit arbre.

11. Groupe selon l'une quelconque des revendications précédentes, **caractérisé en ce que** chaque dite structure de support comprend un corps tubulaire extérieur et un corps tubulaire intérieur, qui sont coaxiaux à l'axe ; lesdits corps tubulaires intérieur et extérieur définissant entre eux une cavité correspondante qui loge ladite boîte correspondante, une partie dudit premier moyen actionneur, et ledit deuxième moyen actionneur.

12. Groupe selon la revendication 11, **caractérisé en ce que** chaque dite boîte comprend un moyeu tubulaire de celle-ci couplé de manière coulissante audit corps tubulaire intérieur correspondant ; ledit corps intérieur et ledit moyeu tubulaire délimitant une première chambre à volume variable et une seconde chambre à volume variable pour un fluide de fonctionnement desdits premier et deuxième moyens actionneurs, respectivement.
